# EUROPEAN PATENT APPLICATION

(11) **EP 1 566 224 A2**
(43) Date of publication of application: **24.08.2005**
(21) Application number: 05002758.0
(22) Date of filing: 10.02.2005
(51) Int. Cl.: B05B 15/12, B05B 13/00, B05B 12/00, B28B 11/04

(54) **Device for adjusting the amount of a coating product to be applied to ceramic tiles or similar articles**

(30) Priority: 20.02.2004 IT BO20040102
(71) Applicant: Air Power Group S.p.A., (Reggio Emilia) (IT)
(72) Inventor: Malavasi, Paolo, 41030 Albareto (Modena) (IT)
(74) Representative: Dall'Olio, Giancarlo

(57) **Abstract**

The adjusting device (10) is for adjusting the amount of engobe, or any other similar product, to be applied to ceramic tiles (1). It is enclosed in an apparatus (10) for continuous spray application of said product. The apparatus (100) comprises an application chamber (2) and engobe sprayers (3) placed in the upper portion of the application chamber (2), and oriented towards a top surface (1a) of the tiles (1) to be glazed.

The adjusting device (10) comprises a telescopic movable wall (11), comprising a plurality of wall segments (11a,11b,11c), placed inside the application chamber (2) and movable progressively between a non operating position (A), wherein it doesn't affect the engobe flow, and a maximum adjustment position (B), wherein the movable wall (11) interposes between the sprayers (3) and the tile (1) for deflecting at least a portion of the engobe flow to a direction falling outside the tile surface (1a) to be glazed. The adjusting device (10) moreover comprises actuating means (20), mechanically coupled to the movable wall (11) and fit to move the same between the aforesaid positions (A) and (B).

## Description

The present invention fits into the technical sector concerning the manufacturing of glazed articles of ceramic stuff, and more specifically of ceramic tiles.

Particularly the present invention concerns a device for adjusting the amount of a product, e.g. glaze or engobe, to be applied on ceramic tiles, embedded in an apparatus for continuous application of the same product.

Within the ceramic industry articles, and particularly tiles, are manufactured from a raw, pasty material, in a press. Subsequently the articles are subject to a series of treatments fit to give the same articles the final appearance and hardness. These treatments can vary depending on different manufacturing technologies.

One of the aforesaid treatments that is always carried out on the raw tiles comprises the application of a substantially homogeneous layer of glaze or engobe, that covers their whole upper face and forms a coloured priming coat for the subsequent treatments that could be performed on the tiles. In the following of the present description it will be referred, by way of example, to an apparatus for applying a substantially homogeneous layer of engobe to ceramic tiles. Engobe is a suitably dosed mixture of water, clay and powdery glass, this latter adding some desired colour to the mixture. The amount of the engobe applied defines the base coverage degree, as well as the ratio at which the tile will absorb the products that will be applied during the subsequent treatments.

The aforesaid processing is generally accomplished in suitable application chambers, wherein tiles pass through over a tape conveyor. In the upper part of the application chamber a plurality of spraying devices is provided, said devices being arranged along the conveyor path and being fit to spray the tiles with jets of atomised, liquid or dense engobe. The spraying devices are connected to a tank by means of one or more pumps. The sprayed engobe which falls outside the tiles is collected at the bottom of the application chamber. It is then filtered and conveyed to the tank to be reused.

In order to achieve a good engobe atomisation, and to obtain a homogeneous spraying thereof on the whole treated surface, the spraying device must be provided with spraying nozzles having a very small diameter (down to some tenths of millimetre wide). If, for any reason, the engobe flowing to the spraying devices is stopped, it tends to clot around the spraying nozzles and to obstruct them. This inevitably leads to decrease the engobe flow and, by consequence, to reduce the surface coverage and to make it not homogeneous enough.

For the above reasons, in the above described apparatus, the engobe must be sprayed continuously, and its supply cannot be stopped unless for periodic maintenance procedures of the same apparatus. It is moreover substantially impossible to modulate the engobe flow passing through the nozzles, since for a given inner nozzle diameter, in order to achieve a good atomisation, it is necessary to provide a minimum constant feed pressure. This also means that, in conventional spray application apparatus, it is not possible to vary the amount of engobe applied to the tiles.

On the other hand there is an increasing interest for spray application apparatus wherein an adjustment of the amount of engobe applied to the tiles on the same production line, in order to obtain on the same tiles, by example, new and original decorating effects based on different colour densities given by engobe layers of different thickness, or on different ratio in absorbing the decorating products that would be subsequently applied to the tiles.

The main object of the present invention is to provide an adjusting device capable to allow an immediate adjusting of the amount of engobe applied to the tiles passing through an engobe application apparatus.

Another object of this invention is to provide an adjusting device which doesn't reduce the degree of engobbio atomisation nor the homogeneousness of its surface distribution on tiles.

A further object of this invention is to provide an adjusting device which is of simple manufacturing, and which is cheap and easy to maintain.

A further object of this invention is to propose an adjusting device which can be easily mounted on existing application apparatus not originally provided with.

All of the aforesaid objects are obtained by a device for adjusting the amount of a product to be sprayed on ceramic tiles, made according to the contents of the appended Claims.

The characteristic features of the present invention, as they will result from the patent Claims, are pointed out in the following detailed description, with particular reference to the appended drawings, wherein:
- figure 1 shows schematically a front sectional view of an apparatus for applying engobe provided with an adjusting device made according to the present invention;
- figure 2 shows schematically the same apparatus with the adjusting device in a non operating position A;
- figures from 3 to 5 show the apparatus of the previous figures with the adjusting device arranged according to different adjusting positions;
- figure 6 shows schematically a side transparency view of the adjusting device, provided with actuating means made according to a different embodiment thereof;
- figure 7 shows schematically a front view of the device of figure 6;
- figure 8 shows, at an enlarged scale, a detailed portion of the device shown in figure 6, having a carriage and clamping means for the adjusting wall.

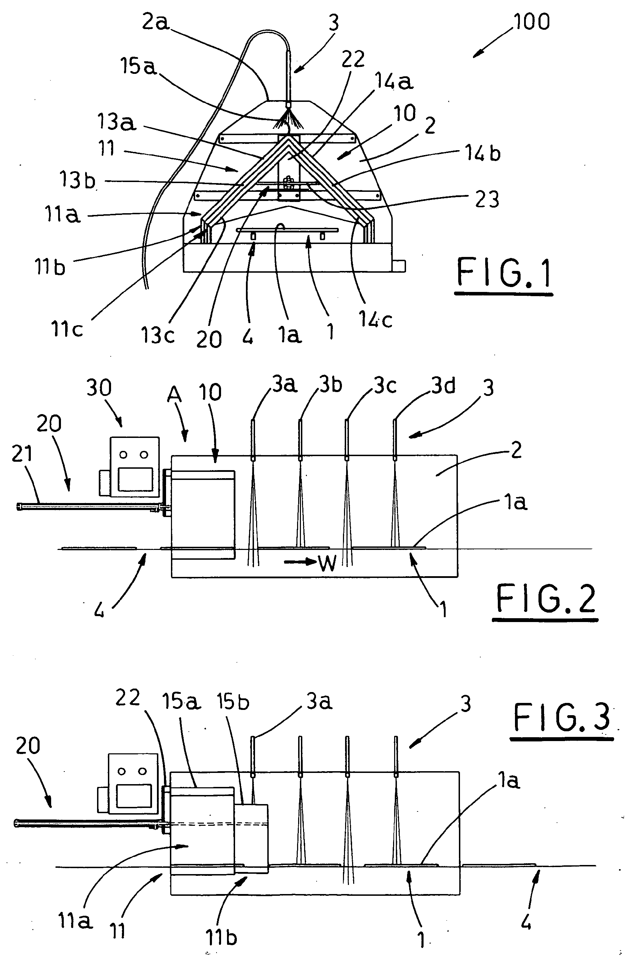

With reference to figures 1 and 2, and to a preferred embodiment of the present invention, numeral 100 indicates as a whole an apparatus for continuously applying engobe to a surface 1a of tiles 1 to be glazed, these latter moving along a transport direction W.

The apparatus 100 comprises an application chamber 2, defined and delimited by a box structure 2a comprising a bell-shaped frame. In the upper portion of chamber 2 there is provided spraying means 3, fit to supply the aforesaid engobe. More particularly, the spraying means 2 comprises four atomisers 3a,3b,3c,3d, arranged longitudinally with respect to the transport direction W of tiles 1, fit to supply corresponding uniformly distributed jets, downwardly oriented, of atomised engobe.

The tiles 1 are progressively transported through the lower portion of the application chamber 2 by a belt conveyor 4, at a transport speed which allows, together with a known spraying intensity, each tile 1 to be provided with a uniform layer of engobe having a pre-defined thickness.

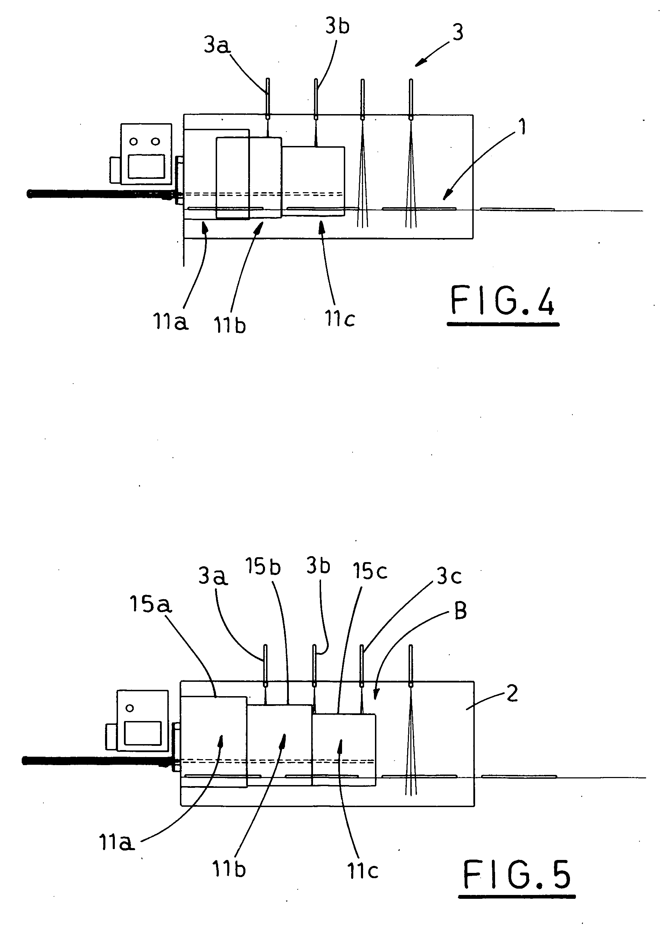

Upstream of spraying means 3 there is arranged an adjusting device 10 made according to the present invention. This adjusting device 10 comprises a movable wall 11, placed inside the application chamber 2 and having a transverse width which is at least equal to the maximum width of tiles to be glazed in the apparatus 100. The movable wall 11 consists of a plurality of wall segments 11a, 11b, 11c, telescopically coupled one each other. Said segments 11a,11b,11c are progressively extensible in a longitudinal direction, with respect to the application chamber 2, between a non operating position A (figure 2), wherein they are nested one into each other and wherein they doesn't affect the engobe flow coming from the sprayers 3, and a position of maximum adjustment B (figure 5), wherein they deflect a maximum desired portion of the engobe flow.

Each wall segment 11a,11b,11c of the movable wall 11 comprises a pair of sloping, counter-faced plates, respectively 13a,14a;13b,14b;13c,14c, mating plates of each pair converging to a central cusp 15a,15b,15c, oriented toward the spraying devices 3.

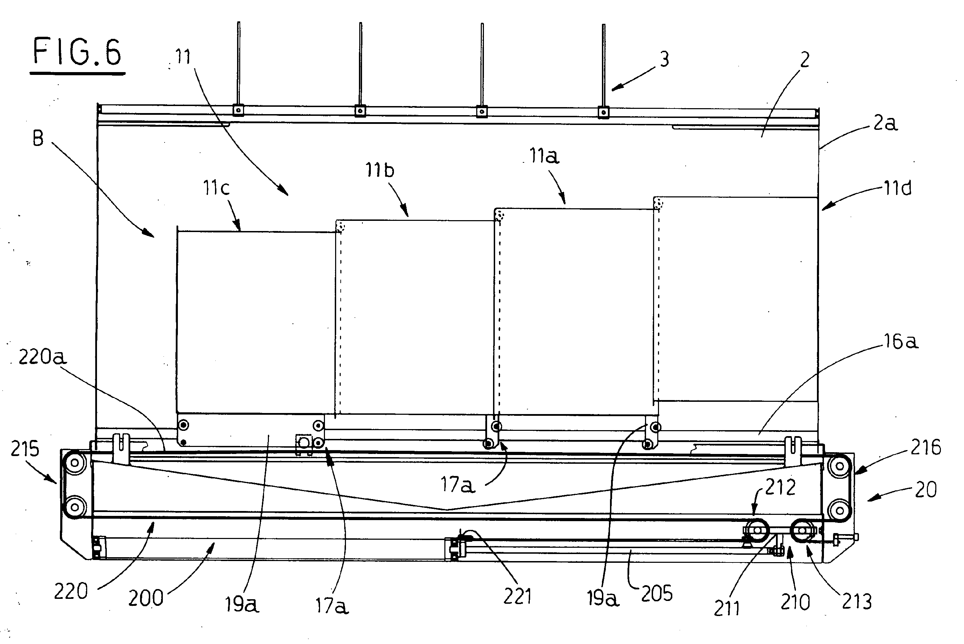

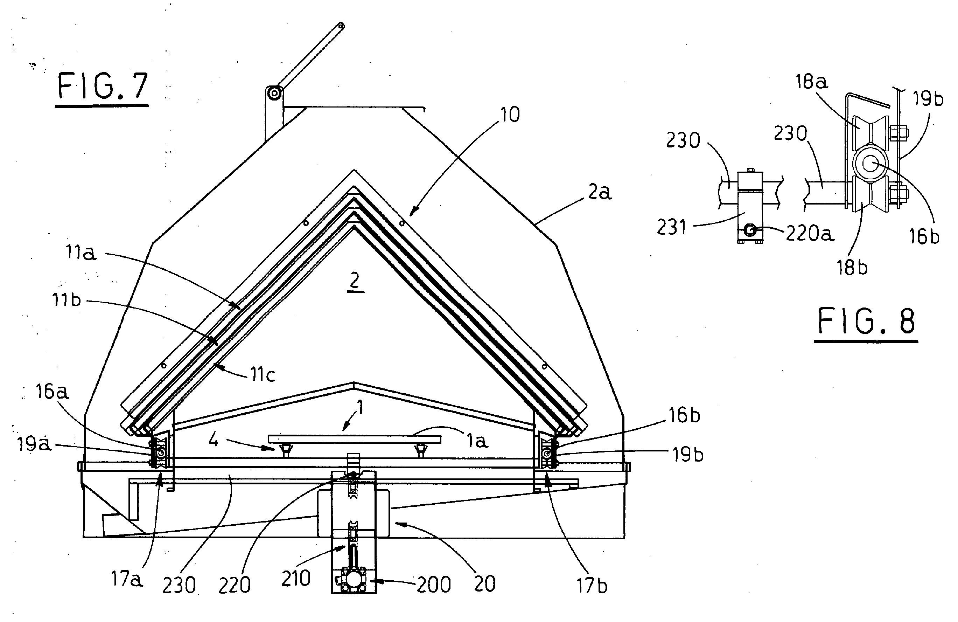

Each one of the aforesaid wall segments 11a, 11b, 11c of the wall 11 is slidably mounted on a pair of longitudinal guides 16a,16b (see figures 6,7) by means of a pair of carriages 17a,17b, mounted on corresponding brackets 19a,19b.

Each carriage 17a,17b respectively comprises a pair of idle rollers, an upper roller 18a and a lower roller 18b, fit to engage the corresponding longitudinal guide respectively over and under the same.

Actuating means 20 is provided upstream of the movable wall 11, fit to slidably drive the same wall 11, as illustrated in figures 1 to 5 in a first embodiment thereof. The actuating means 20 is electrically connected to a PLC programmable control unit 30; they are fit to move said movable wall in a continuous way between the idle position A and maximum adjustment position B, as stated earlier. More particularly, the actuating means 20 comprises a pneumatic cylinder 21, arranged longitudinally at the upstream end of the application chamber 2. The cylinder 21 is fixed to a chassis 22, which is fixed to the above mentioned box structure 2a. The cylinder stem is fixed to a bracket 23, which is coupled to the innermost wall segment 11c. Suitable ledge members are moreover provided between this latter and the intermediate wall segment 11b, and between this and the outermost wall segment 11a, in order to prevent a disengagement of the inner wall segments from the outer wall segments.

Suitable proximity sensors of known art are moreover coupled to the cylinder stem, in order to detect some significant positions of the movable wall 11, i.e. the idle position A, the maximum adjustment position B and, eventually, one or more intermediate positions, by example those corresponding to a complete interception, by the movable wall 11, of the engobe flow respectively coming from spraying device 3a (figure 3) and from spraying device 3b (figure 4).

In a constructional variant of the above described actuating means 20, not shown, the movable wall 11 is connected to a rigid stem, manually operable for extend or retract the movable wall 11 inside the application chamber 2.

According to a different embodiment of the adjusting device 10, not shown as immediately understandable, the movable wall 11 is shaped in a single wall segment of suitable length, placed upstream of and under the spraying devices 3, and eventually extending outside of the upstream end of the application chamber 2. In this case it comprises a single pair of sloping plates 13,14, converging to a single central cusp 15 oriented toward the spraying means 3.

The operation of the adjusting device 10 according to the first embodiment is shown in figures 2 to 5. In figure 2 the movable wall 11 is in its non operating position A, wherein it doesn't affects the engobe flow generated by the spraying devices 3. A layer of engobe having a maximum desired thickness is thus applied to the tiles 1 going through the application chamber 2.

In order to reduce the thickness of the aforesaid engobe layer the movable wall 11 is progressively moved forward in a longitudinal direction until a segment 11b of the same wall 11 begins to interpose between the sprayer devices 3 and the tiles 1, and to intercept the engobe flow coming from the upstream sprayer 3b (figure 3). Part of said flow is then deflected by the sloping plates 13b,14b of segment 11b to the side borders of the application chamber, and doesn't affect the crossing tiles anymore. Depending on the amount of engobe which is desired for tiles 1, the movable wall can be progressively extended (figure 4) until it also affects the engobe flow generated by the downstream sprayers 3b,3c and until it reaches its maximum adjustment position B (figure 5), wherein the fraction of the whole engobe flow which reaches the tiles 1 matches the minimum desired flow. Theoretically, said flow fraction could be zero, if the maximum adjustment position B of the movable wall 11 would lead to a complete deflection of the engobe flow.

In order to increase the engobe flow that reaches the tiles is obviously enough to withdraw the movable wall 11 until it reaches a desired intermediate position, or the non operating position A for restoring a full engobe flow.

The position of the movable wall 1 can be defined, even for each single tile to treat, by the control unit 30. In this latter runs a suitable actuating program, made with known programming techniques, wherein the amount of engobe to apply to the tiles 1 is so defined to obtain a periodic or casual series of tiles 1 having different colour shade, or different colour covering degrees of the raw tile as well, or different behaviour by the single tile to subsequent decorating treatments.

Figures 6 and 7 show a second, preferred embodiment of the actuating means 20. In the above figures the adjusting device 10 is shown, by way of example, with the movable wall 11 split into four segments, a fixed one 11d and movable segments *11a, 11b, 11c.

In this embodiment, the actuating means 20 comprises a pneumatic cylinder 200, arranged longitudinally and centrally in the box structure 2a, under the application chamber 2. The free end of the cylinder stem 205 is connected to the end movable segment 11c of movable wall 11 by cable dragging means 210. This latter is fit to transport the movable segments 11a,11b,11c between the above cited non operating position A and maximum adjustment position B, by consequence of the extension and retraction of the stem 205.

More particularly, the cable dragging means 210 comprises a T-shaped bracket 211, fixed to the free end of the stem 205 and carrying a pair of idle step-down pulleys, respectively a first pulley 212 and a second pulley 213. These step-down pulleys 212,213 are arranged longitudinally, according to a direction parallel to the stem 205 axis.

The dragging means 210 moreover comprises a first pair of transmission pulleys 215, placed at one end of the box structure 2a, under the tiles conveyor 4, and a second pair of transmission pulleys 215, placed at the opposite end of the box structure 2a, substantially at the same height of the aforesaid first pair of pulleys 215. The pulleys of each pair are idle and arranged vertically.

One end 221 of a cable 220 is fixed to the fixed portion of the pneumatic cylinder 200. The cable 220 extends for engagement with the first step-down pulley 212, and then with the first pair of transmission pulleys 215, with the second pair of transmission pulleys 216 and with the second step-down pulley 213. The opposite end 222 of the cable 220 is finally fixed to the box structure 2a, just under the second pair of transmission pulleys 216. In this way, the cable 220 moves by consequence of the extension and retracting of the stem 205. Between the first pair of transmission pulleys 215 and the second pair of transmission pulleys 216, the cable 220 defines a longitudinal cable branch 220a, extending parallel to the tiles 1 path, substantially for the whole length of the application chamber 2. By consequence of the cable path, comprising the step-down pulleys, the space covered by a given point on longitudinal branch 220a is twice the path of the stem 205, and oppositely oriented.

The cross bar 230 of segment 11c is coupled to the cable branch 220a by means of a clamp 231 (see figure 8). In this way, the segment 11c is forced to shift together with the aforesaid cable branch 220a, and to force the other movable segments 11a,11b to corresponding shifting, according to the shifting stops imposed by their above mentioned ledge elements.

The present adjusting device 10 advantageously allows to achieve a precise adjustment of the amount of engobe applied to tiles 1 in a simple and fast way, and without interfering with the correct sprayers 3 operation.

The movable walls system used herein is of simple and cheap manufacturing, it is substantially maintenance-free and it can be easily mounted both on new application apparatus and on site, on operating apparatus.

The adjusting device 10 moreover allows to obtain tile series having a different degree of colour covering for raw tiles, or having a different behaviour by single tiles to subsequent decorating treatments.

It has to be understood that the above detailed description has been made exclusively by way of non-limiting example. Therefore, all of the modification or variants of the present invention are intended to fit into the scopes of the present invention, as above described and as claimed in the following.

## Claims

1. Device for adjusting the amount of engobe to be applied on ceramic tiles 1 in an apparatus 100 for continuous application of said engobe, said apparatus 100 comprising an application chamber 2, defined by a box structure 2a, and spray application means 3 of said engobe, arranged in the upper side of said application chamber 2 and pointed toward a surface 1a of said tiles 1 to be glazed, these latter being transported through said application chamber 2 by a transporting member 4, said adjusting device 10 being **characterised in that** it comprises: at least one movable wall 11, arranged inside of said application chamber 2 and progressively movable between an idle position A, wherein it doesn't interfere with said spraying application of engobe, and a position B of maximum adjustment, wherein said movable wall 11 interposes between said spray application means 3 and tile 1 in order to intercept at least a part of the engobe flow and to direct it outwardly of said tile surface 1a being glazed; actuating means 20, mechanically connected to said movable wall 11 and fit to move the same between said positions A,B.

2. Device according to Claim 1, **characterised in that** said movable wall 11 is arranged longitudinally with respect to a forwarding direction W for said tiles 1.

3. Device according to Claim 1 or Claim 2, **characterised in that** said movable wall 11 comprises a pair of counter-faced sloping plates 13,14, converging to a central cusp 15, oriented toward said application means 3.

4. Device according to Claim 1 or Claim 2, **characterised in that** said movable wall 11 comprises a plurality of wall segments 11a,11b,11c, arranged telescopically, and extractably mounted so as to occupy progressively greater portions of said application chamber 2.

5. Device according to Claim 4, **characterised in that** each of said wall segments 11a, 11b, 11c comprises a respective pair of counter-faced plates 13a,14a;13b,14b;13c,14c, mating plates of each pair being sloping and converging to corresponding central cusps 15a,15b,15c.

6. Device according to Claim 1, **characterised in that** said actuating means 20 comprises a pneumatic cylinder 21, arranged longitudinally at the upstream end of said application chamber 2, fixed to a support 22 integral with said box structure 2a, an extensible stem of said pneumatic cylinder 21 being fixed, at its free end, to said movable wall 11.

7. Device according to Claim 1, **characterised in that** said actuating means 20 comprises a pneumatic cylinder 200, longitudinally arranged in said box structure 2a under said application chamber 2, the free end of a stem 205 of said pneumatic cylinder 200 being connected to said movable wall 11 by means of cable dragging means 210, this latter being fit to transport said movable wall 11 between said idle position A and maximum adjustment position B, by consequence of extensions and subsequent retractions of said stem 205.

8. Device according to Claim 7, **characterised in that** said dragging means 210 comprises: a T-shaped bracket 211, fixed to the free end of said stem 205 and carrying a pair of idle step-down pulleys, respectively a first pulley 212 and a second pulley 213; a first pair of transmission pulleys 215, placed at one end of said box structure 2a; a second pair of transmission pulleys 216, placed at the opposite end of said box structure 2a; a cable 220, one end thereof being fixed with respect of said pneumatic cylinder 200, and extending from this latter for engagement with said first step-down pulley 212 and then subsequently with said first pair of transmission pulleys 215, with said second pair of transmission pulleys 216 and with said second step-down pulley 213, the opposite end 222 of said cable 220 being fixed to said box structure 2a and said movable wall 11 being connected to a longitudinal branch 220a of said cable 220 comprised between said first pair of transmission pulleys 215 and said second pair of transmission pulleys 216.

9. Device according to Claim 7, **characterised in that** said pneumatic cylinder 200 is centrally arranged with respect to said box structure 2a, a cross bar 230 being provided in the lower part of said movable wall 11, said cross bar 230 being coupled to the branch 220a of said cable 220 by means of a clamp 231.

10. Device according to Claim 4 and Claim 8, **characterised in that** the movable end segment 11c of said movable wall 11 is coupled to said cable 220.

11. Device according to Claim 1, **characterised in that** said actuating means 20 comprises a manually operable stem, connected to an end of said movable wall 11 and fit to allow the same to slide inside said application chamber 2.

12. Device according to any one of the previous Claims, **characterised in that** it moreover comprises a control unit 30, fit to drive said actuating means 20 for positioning said movable wall 11 according to a stored program for defining the glazing ratio of each one of said tiles 1.

13. Device according to Claim 12, **characterised in that** it moreover comprises a plurality of sensors, electrically connected to said control unit 30 and fit to detect the current position of said actuating means 20 or of said movable wall 11, and to send the corresponding coded information to said control unit 30.

14. Device according to Claim 1, **characterised in that** said movable wall 11 is slidably mounted on a pair of longitudinal guides 16a,16b by means of pairs of carriages 17a,17b mounted on corresponding brackets 19a,19b.

15. Device according to Claim 4, **characterised in that** said wall segments 11a,11b,11c are slidably mounted on a pair of longitudinal guides 16a,16b by means of respective pairs of carriages 17a,17b mounted on corresponding brackets 19a,19b.

16. Device according to Claim 14, **characterised in that** each one of said carriages 17a,17b comprises a pair of idle rollers, upper 18a and lower 18b, fit to engage their corresponding longitudinal guide 16a,16b above and under the same, respectively.
